# EUROPÄISCHE PATENTANMELDUNG

(11) **EP 2 617 546 A1**
(43) Veröffentlichungstag der Anmeldung: **24.07.2013**
(21) Anmeldenummer: 12000378.5
(22) Anmeldetag: 20.01.2012
(51) Int. Cl.: B29B 9/06, B29C 47/30

(54) **Verfahren zum Beheizen von Schmelzekanälen in einer Lochplatte und Verfahren zum Granulieren einer Polymerschmelze**

(71) Anmelder: Automatik Plastics Machinery GmbH, 63757 Grossostheim (DE)
(72) Erfinder: Dahlheimer, Stefan, 63801 Kleinostheim (DE); Boczon, Jaroslaw, 63811 Stockstadt (DE); Meidhof, Helmuth, 63762 Grossostheim (DE); Braun, Thomas, 63762 Grossostheim (DE); Nising, Philip, 8618 Oetwil am See (CH); Weber, Jörg, 9542 Münchwilen TG (CH)
(74) Vertreter: Spranger, Stephan

(57) **Zusammenfassung**

Die Erfindung betrifft ein Verfahren zum Beheizen von Schmelzekanälen in einer Lochplatte einer Granuliervorrichtung mit zumindest einer darin angeordneten Düsenöffnung und einem Lochplattengrundkörper sowie ein entsprechendes Verfahren zum Granulieren einer Schmelze, z. B. aus thermoplastischem Kunststoffmaterial wie etwa EPS, welche einen thermisch sensiblen Bestandteil oder ein Schäummittel enthält, in eine Granulierkammer, durch welche ein Fluid eines Fluidkreislaufs strömt, mit einem Druck oberhalb des Umgebungsdrucks, wobei in einem ersten Schritt die Schmelze durch zumindest einen Schmelzekanal und durch zumindest eine Düsenöffnung einer Lochplatte mit einem Lochplattengrundkörper in die Granulierkammer gepresst wird, in einem zweiten Schritt die Schmelze mittels einer Schneidvorrichtung in Granulatkörner zerteilt wird und in einem dritten Schritt die so entstehenden Granulatkörner zusammen mit dem Fluid aus der Granulierkammer ausgetragen werden und dann das Fluid und die Granulatkörner voneinander getrennt werden, wobei jeweils die Energie einer Schmelze zum Beheizen über die gesamte Länge eines jeweiligen Schmelzekanals bis zur Düsenöffnung genutzt wird und dazu zumindest einen der folgenden Schritte vorgesehen ist:
- Vorsehen einer Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Anti-Haft Beschichtung und/oder in Form einer spanend glättenden Oberflächenbearbeitung.

## Beschreibung

Die Erfindung betrifft ein Verfahren zum Beheizen von Schmelzekanälen in einer Lochplatte einer Granuliervorrichtung mit zumindest einer darin angeordneten Düsenöffnung und einem Lochplattengrundkörper gemäß dem Oberbegriff des Anspruchs 1 sowie ein entsprechendes Verfahren zum Granulieren einer Schmelze, z.B. aus thermoplastischem Kunststoffmaterial wie etwa EPS, welche einen thermisch sensiblen Bestandteil oder ein Schäummittel enthält, in eine Granulierkammer, durch welche ein Fluid eines Fluidkreislaufs strömt, mit einem Druck oberhalb des Umgebungsdrucks, wobei in einem ersten Schritt die Schmelze durch zumindest einen Schmelzekanal und durch zumindest eine Düsenöffnung einer Lochplatte mit einem Lochplattengrundkörper in die Granulierkammer gepresst wird, in einem zweiten Schritt die Schmelze mittels einer Schneidvorrichtung in Granulatkörner zerteilt wird und in einem dritten Schritt die so entstehenden Granulatkörner zusammen mit dem Fluid aus der Granulierkammer ausgetragen werden und dann das Fluid und die Granulatkörner voneinander getrennt werden, gemäß dem Oberbegriff des Anspruchs 9. Die Erfindung betrifft ferner Granulat aus thermoplastischem Kunststoffmaterial, gemäß Anspruch 14 hergestellt nach dem erfindungsgemäßen Verfahren

Generell werden zur Granulierung von thermoplastischem Kunststoffmaterial, wie z.B. Polyethylen, Polypropylen oder auch EPS, Granuliervorrichtungen mit z.B. Extrudern oder Schmelzepumpen eingesetzt, bei welchen in entsprechenden Granulierverfahren das geschmolzene Kunststoffmaterial durch Düsenöffnungen einer Lochplatte in ein Kühlmedium, beispielsweise Wasser, z.B. in einem Prozessraum oder einer Prozesskammer gepresst wird und von einer Messeranordnung, deren zumindest ein Messer die Düsenöffnungen der Lochplatte überstreicht, dort abgetrennt wird, so dass Granulatkörner gebildet werden. Entsprechende Vorrichtungen sind als Unterwassergranulierungsanlagen beispielsweise unter der Produktbezeichnung SPHERO® vom Unternehmen Automatik Plastics Machinery GmbH bekannt.

Dabei kommt es in der Regel im Bereich der Lochplatte zu hohen thermischen Belastungen der Polymerschmelze aufgrund des unmittelbaren Kontakts mit dem heißen metallischen Oberflächen der Lochplatte einerseits sowie dem Kühlmedium und den sonstigen Anlagenteilen der Granuliervorrichtung andererseits. Insbesondere bei der Verarbeitung von treibmittelhaltigen Kunststoffschmelzen, beispielsweise aus EPS-Material, treten außerdem Probleme im Bereich der Schmelzeführung durch eine solche Lochplatte dadurch auf, dass dort zum einen ein hoher Schmelzedruck vorliegt und auch ein hoher Gegendruck durch den Druck des Kühlmediums in dem Prozessraum (zur Verhinderung von Ausgasungen des Treibmittels) und zum anderen der Durchmesser der entsprechenden Bohrungen der Düsenöffnungen sehr gering ist (beispielsweise etwa 0,1 bis 1,0 mm). Ferner ist die Verweilzeit des Schmelzematerials in den schmelzeführenden Kanalbereichen der Lochplatte durch ein laminares Strömungsprofil teilweise verhältnismäßig lang, was zum einen zum Zersetzen des Schmelzematerials an den entsprechenden Kanalwänden führen kann und zum anderen die Verfestigung des Schmelzematerials dort und damit die Ansammlung und schließlich Verstopfung der Düsenöffnungen mit Schmelzematerial bewirkt. Somit ist bei Lochplatten solcher Granuliervorrichtungen eine gute thermische Trennung von Schmelze und Lochplattenkörper wünschenswert, um zum einen den sicheren Betrieb einer entsprechenden Granuliervorrichtung zu gewährleisten und zum anderen auch möglichst lange Standzeiten ohne Verstopfen der Düsen dort zu ermöglichen. Gleichzeitig ist aber auch ein möglichst gleichmäßiger Temperaturverlauf über den Strömungsverlauf durch die Lochplatte von Bedeutung, um reproduzierbar gleichmäßige Fließbedingungen und somit Materialeigenschaften zu erhalten und ein Verklumpen der Schmelze dort zu verhindern. Ferner ist zu beachten, dass wiederum möglichst viel Wärmeenergie aus dem beheizten Lochplattenkörper in den Bereich des Übergangs zum Prozessraum gelangen sollte, um eine zu starke Abkühlung der Schmelzekanäle durch das Kühlmedium in diesem Bereich zu vermeiden.

Das US-Patent US 4,678,423 beschreibt eine Granulierlochplatte zur Anordnung an der Stirnfläche eines Granulierkopfs eines Extruders zum Granulieren von Kunststoffen, wobei diese Granulierlochplatte mit hoch wärmeleitfähigen Lochplatteneinsätzen ausgestattet ist.

Die deutsche Offenlegungsschrift DE 32 43 332 A1 beschreibt Düsen, welche mittels eines Luftspalts nur im Bereich der Austrittsöffnung davon gegen einen Düsenplattenkörper isoliert sind.

Es ist somit die Aufgabe der vorliegenden Erfindung, ein Verfahren zum Beheizen von Schmelzekanälen in einer Lochplatte einer Granuliervorrichtung bzw. ein entsprechendes Verfahren zum Granulieren einer Schmelze vorzusehen, welches auf einfache und kostengünstige Art und Weise eine optimierte Wärmeisolation der Schmelze bei gleichzeitig möglichst konstantem Temperaturverlauf und gleichbleibendem Strömungsprofil über den Schmelzeweg der Schmelze in den entsprechenden Schmelzekanälen bei gleichzeitige hohem Temperatureintrag in den Austrittsbereich der Schmelze in den Prozessraum ermöglicht und somit einen sicheren und zuverlässigen Betrieb ohne Verklumpungen oder Zersetzungen von Schmelzematerial in entsprechenden Granulieranlagen ermöglicht, so dass Granulate aus solchem Schmelzematerial in konstanter Qualität zuverlässig herstellbar sind.

Die erfindungsgemäße Aufgabe wird gelöst durch ein Verfahren zum Beheizen von Schmelzekanälen mit den Merkmalen gemäß Anspruch 1 sowie durch ein entsprechendes Verfahren zum Granulieren einer Schmelze, welche einen thermisch sensiblen Bestandteil und/oder ein Schäummittel enthält, mit den Merkmalen gemäß Anspruch 9 sowie durch Granulat aus thermoplastischem Kunststoffmaterial gemäß Anspruch 14. Bevorzugte Ausführungsformen der Erfindung sind in den jeweiligen abhängigen Ansprüchen definiert.

Das erfindungsgemäße Verfahren zum Beheizen von Schmelzekanälen in einer Lochplatte einer Granuliervorrichtung mit zumindest einer darin angeordneten Düsenöffnung und einem Lochplattengrundkörper ist **dadurch gekennzeichnet, dass** bei dem erfindungsgemäßen Verfahren die Energie einer Schmelze, insbesondere einer Polymerschmelze bzw. einer Schmelze aus dem plastischen Kunststoffmaterial, welche einen thermisch sensiblen Bestandteil und/oder ein Schäummittel enthält, wie beispielsweise expandierbares Polystyrol (EPS), zum Beheizen über die gesamte Länge eines jeweiligen Schmelzekanals bis zur Düsenöffnung dort genutzt wird und das Verfahren dazu zumindest einen der folgenden Schritte, bevorzugt beide der folgenden Schritte, aufweist:
- Vorsehen eine Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Antihaftbeschichtung und/oder in Form einer spanend glättenden Oberflächenbearbeitung.

Erfindungsgemäß soll also der Wärmeübergang aus der und in die durch den entsprechenden Schmelzekanal durchtretende Schmelze durch die verringerte Wärmeleitfähigkeit des umgebenden Materials verringert werden. Ferner wird erfindungsgemäß optional oder zusammen mit der erfindungsgemäßen spezifischen Auswahl der Wärmeleitfähigkeit die Strömung im Schmelzekanal entsprechend durch die strömungsoptimierende Maßnahme verbessert, so dass keine Unregelmäßigkeiten in der Schmelzeströmung dort und somit längere Verweilzeiten der Schmelze in bestimmten Bereichen des Schmelzekanals auftreten können. Dabei wird gemäß dem erfindungsgemäßen Verfahren eine Antihaftbeschichtung vorgesehen bzw. eine entsprechend spanend glättende Oberflächenbearbeitung, wie etwa Honen, im Bereich des jeweiligen Schmelzekanals, wodurch eben die optimierte Strömung erfindungsgemäß im entsprechenden Verfahren gegeben ist. Insbesondere kommt es durch diese strömungsoptimierenden Maßnahmen zu einer Verringerung von Anbackungen und Zersetzung von Schmelzematerial an den Oberflächen des Schmelzekanals. Derartige Anbackungen von vercracktem Schmelzematerial könnten sich lösen und die feinen Bohrungen der Düsenplatte so zusetzen.

Eine Antihaftbeschichtung im Sinne der Erfindung weist eine verhältnismäßig geringere Oberflächenenergie auf als das unbeschichtete Ausgangsmaterial und somit eine demgegenüber verringerte Benetzbarkeit, Als erfindungsgemäße Antihaftbeschichtung geeignet hat sich beispielsweise eine sogenannte Metco-Beschichtung des Unternehmens Sulzer erwiesen. Entsprechende Beschichtungen können beispielsweise im PVD-(Physical Vapour Deposition)-Verfahren aufgebracht werden. Weitere Beispiele von geeigneten Zusammensetzungen von Antihaftbeschichtungen sind beispielsweise Glaskeramik, Keramik, Siliziumoxide wie etwa Thermolon™, Fluorpolymere, siliziumbasierte Polymere und/oder Lunac1 des Unternehmens WMV Europe bv.

Durch die spezifisch erfindungsgemäß geforderte geringe Wärmeleitfähigkeit und/oder die Antihaftbeschichtung und/oder die spanend glättende Oberflächenbearbeitung wird unter erfindungsgemäßer Nutzung der Wärmeenergie, welche der dort durchtretenden Schmelze immanent ist, ein Anhaften des Schmelzematerials an der entsprechenden Wandung also verringert bzw. erfindungsgemäß ganz vermieden, wodurch das Strömungsverhalten des Schmelzematerials sogar ohne die zusätzlich gemäß dem ersten Verfahrensschritt mögliche verbesserte Wärmeisolation dort über die gesamte Länge des jeweiligen Schmelzekanals, durch welchen die Schmelze zur Düsenöffnung strömt, bzw. in den dem Schmelzekanal zugeordneten mehreren Düsenöffnungen gleichmäßiger, d.h. insbesondere laminar ausgebildet, wird. Eine sich durch das Anhaften ergebende unerwünschte Scherströmung des Schmelzematerials mit einer sich so entsprechend einstellenden tendenziell eher parabelförmigen Strömungsgeschwindigkeitsverteilung über den Durchmesser des Schmelzematerials kann so erfindungsgemäß vermieden werden, wobei sich so eine eher wünschenswerte tropfenförmige und somit gleichmäßigere Strömungsgeschwindigkeitsverteilung über den Durchmesser des entsprechenden Schmelzekanals erfindungsgemäß ergeben wird.

Beim erfindungsgemäßen Verfahren weist der Lochplattengrundkörper eine Temperatur auf, welche nicht mehr als 30°C über der Temperatur der Schmelze beim Eintritt in den Schmelzekanal liegt, bevorzugt nicht mehr als 10°C darüber und besonders bevorzugt weist er eine Temperatur, welche gleich oder niedriger ist als die der Schmelze beim Eintritt in den Schmelzekanal gemäß der dort gemessenen Schmelzetemperatur in der Schmelzeströmung. Die Temperatur der Schmelze kann beispielsweise durch Einbringen eines Thermoelements z.B. mit dessen Messspitze, in den Schmelzestrom am gewünschten Messort bestimmt werden. Die Temperatur des Lochplattengrundkörpers kann beispielsweise durch Thermoelemente bestimmt werden, welche in den Lochplattengrundkörper im Bereich der Schmelzekanäle in deren Nähe in den Lochplattengrundkörper einbringbar sind. Insbesondere wenn die gleiche Temperatur vorliegt, wird ein Wärmeübergang im Bereich der Wandung somit besonders zuverlässig zu vermeiden sein, was dem Auskühlen der Schmelze und somit einem Verfestigen und der damit verbundenen Verklumpungsneigung der Schmelze in dem Schmelzekanal zuverlässig entgegenwirken kann. Eine niedrigere Temperatur bzw. etwas niedrigere Temperatur in diesem Bereich ist aufgrund der erfindungsgemäßen Verfahrensschritte auch nicht besonders kritisch, da zum einen durch die Wärmeisolation der Wandung mit geringerer Wärmeleitfähigkeit und zum anderen durch die strömungsoptimierenden Merkmale der Wandung in diesem Bereich auch dann noch erfindungsgemäß ein zuverlässiger Betrieb der Vorrichtung, d. h. ein auf die nötige Temperatur erfindungsgemäß beheizbarer Schmelzekanal mit einer gleichmäßig durchtretenden Schmelze jedenfalls sichergestellt sein kann.

Zur Verbesserung der Servicefreundlichkeit und um jederzeit bei standardmäßig vorhandenen Lochplattengrundkörpem geeignete Wärmeleitfähigkeitskoeffizienten für die Wandungen der Schmelzekanäle auswählen zu können, kann gemäß einer bevorzugten Ausführungsform des erfindungsgemäßen Verfahrens die Wandung als Lochplatteneinsatz zum entfernbaren Einsetzen in den Lochplattengrundkörper vorgesehen werden, wobei im eingesetzten Zustand zwischen dem Lochplatteneinsatz und dem Lochplattengrundkörper ein sich im Wesentlichen über die gesamte Länge des Schmelzekanals dort hindurch verlaufend angeordneter Isolationsraum erstreckt, welcher dabei bevorzugt von einem Temperierfluid, wie beispielsweise Temperieröl, durchströmt wird. Die gemäß dem erfindungsgemäßen Verfahren so bevorzugt vorgesehene zusätzliche Isolierung und/oder Temperierung, d. h. Heizung bzw. Erwärmung, im dortigen Bereich der Lochplatte der Granuliervorrichtung kann die Abkühlung der Schmelze und somit die Verfestigung der Schmelze und die damit verbundene Verklumpungsneigung besonders zuverlässig weiter reduzieren durch den zusätzlich zur erfindungsgemäßen Nutzung der Eigenwärme der Schmelze ergänzenden Wärmeeintrag durch das Temperierfluid, bzw. durch die ergänzende Isolierung durch den Isolierraum, wodurch sich eine zusätzliche Verringerung der Wärmeabfuhr zwischen Schmelze und Lochplattengrundkörper ergeben kann, so dass die Wärme der Schmelze so erfindungsgemäß besonders effektiv (nur) für die erfindungsgemäße Beheizung des eigentlichen jeweiligen Schmelzekanals nutzbar ist.

Zweckmäßig wird gemäß dem erfindungsgemäßen Verfahren bei der entsprechenden strömungsoptimierenden Maßnahme in Form der spanend glatten Oberflächenbearbeitung, beispielsweise durch Honen, eine Oberflächenrauhigkeit im Bereich des Schmelzekanals von kleiner oder gleich 0,8 µm, bevorzugt im Bereich von 0,4 µm bis 0,6 µm, eingestellt. Somit kann erfindungsgemäß das Strömungsverhalten der Schmelze dort so verbessert sein, dass dadurch Anhaftungen aufgrund von Rauhigkeiten dort besonders zuverlässig vermieden werden.

Insbesondere bei der Verarbeitung von expandierbarem Polystyrol ist es zweckmäßig, wenn die Temperatur der Schmelze beim Eintritt in den Schmelzekanal gemäß einer bevorzugten Ausführungsform des erfindungsgemäßen Verfahrens etwa 140° C bis etwa 240° C beträgt, bevorzugt etwa in einem Bereich von 150° C bis etwa 200° C liegt, noch bevorzugter in einem Bereich von etwa 160° C bis etwa 180° C liegt. Die dort beim Eintritt in den Schmelzekanal gemessenen Schmelzetemperatur in der Schmelzeströmung ist dabei z.B. in Abhängigkeit des Durchmessers der Düsenöffnungen, dem Treibmittelgehalt der Schmelze und/oder auch der Viskosität der Schmelze so zu wählen, dass der Druckverlust der Schmelze vom Eintritt in den Schmelzekanal vom dort gemessenen Druckwert im Schmelzestrom zu den Düsenöffnungen mit dem dort gemessenen Druckwert im Schmelzestrom beim Austritt aus den Düsenöffnungen über die entsprechende Dicke der Lochplatte in einem Bereich von etwa 50 bis 250 bar liegt. Die Temperatur der Schmelze kann beispielsweise durch Einbringen eines Thermoelements z.B. mit dessen Messspitze, in den Schmelzestrom am gewünschten Messort bestimmt werden.

Gemäß dem erfindungsgemäßen Verfahren kann die Schmelze eine Schmelze aus thermoplastischem Kunststoffmaterial sein und/oder eine Polymerschmelze sein, welche bevorzugt einen thermisch sensiblen Bestandteil enthält, z.B. eine Substanz mit einem Gewichtsverlust in isothermen TGA-Messungen von mehr als 1% pro Stunde bei Temperaturen von 220°C, beispielsweise ein Flammschutzmittel, und/oder ein Schäummittel enthält. Beispiele sind niedrigsiedendes Polyamid 6 mit Caprolactam als flüchtigem Bestandteil oder expandierbares Polystyrol, EPS, mit einem Treibmitel und/oder optional einem bromhaltigen Flammschutzmittel, wie etwa Hexabromcyclododecan, HBC. Als Treibmittel kann beispielsweise Pentan, Butan, Hexan, Methanol, Ethanol, Propanol, Butanol, Hexanol, 2-Ethylhexanol, Methyl, Wasser, CO₂ Dimethyl Carbonat, und Mischungen davon, verwendet werden. Bevorzugt kann als Treibmittel dabei Pentan und/oder Methyl und Mischungen davon Verwendung finden. Dies gilt auch für das im Folgenden beschriebene erfindungsgemäße Granulierverfahren.

Bei dem erfindungsgemäßen Verfahren zum Granulieren einer Schmelze, welche einen thermisch sensiblen Bestandteil und/oder ein Schäummittel enthält, ist eine Granulierkammer vorgesehen, durch welche ein Fluid eines Fluidkreislaufs strömt, mit einem Druck oberhalb des Umgebungsdrucks, wobei in einem ersten Schritt die Schmelze durch zumindest einen Schmelzekanal und durch zumindest eine Düsenöffnung einer Lochplatte in einem Lochplattengrundkörper in die Granulierkammer gepresst wird, in einem zweiten Schritt die Schmelze mittels einer Schneidvorrichtung in Granulatkörner zerteilt wird und in einem dritten Schritt die so entstehenden Granulatkörner zusammen mit dem Fluid aus der Granulierkammer ausgetragen werden und dann das Fluid um die Granulatkörner voneinander getrennt werden. Zur erfindungsgemäßen Vermeidung der Verfestigung der Schmelze im Bereich des jeweiligen Düsenkanals wird die Energie der Polymerschmelze zum Beheizen über die gesamte Länge des jeweiligen Schmelzekanals bis zur Düsenöffnung erfindungsgemäß benutzt, wobei zumindest einer der folgenden Schritte, bevorzugt beide der folgenden Schritte, angewandt wird/werden:
- Vorsehen einer Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Antihaftbeschichtung und/oder in Form einer spanend glättenden Oberflächenbearbeitung.

Entsprechend der Ausführungen im Zusammenhang mit dem erfindungsgemäßen Verfahren zum Beheizen der Schmelzekanäle werden diese Maßnahmen also auch entsprechend hinsichtlich des erfindungsgemäßen Verfahrens zum Granulieren der Schmelze verwendet. Somit gelten die oben gemachten Aussagen hier im Zusammenhang mit dem erfindungsgemäßen Granulierverfahren entsprechend.

Beim erfindungsgemäßen Granulierverfahren weist der Lochplattengrundkörper eine Temperatur auf, welche nicht mehr als 30°C über der Temperatur der Schmelze beim Eintritt in den Schmelzekanal liegt, bevorzugt nicht mehr als 10°C darüber und besonders bevorzugt weist er eine Temperatur, welche gleich oder niedriger ist als die der Schmelze beim Eintritt in den Schmelzekanal.

Wie bereits oben erwähnt, kann die Schmelze eine Schmelze aus thermoplastischem Kunststoffmaterial und/oder eine Polymerschmelze sein, welche bevorzugt einen thermisch sensiblen Bestandteil und/oder ein Schäummittel enthält, dabei bevorzugt niedrigsiedendes Polyamid 6 mit Caprolactam als flüchtigem Bestandteil oder expandierbares Polystyrol, EPS, mit einem Treibmittel (beispielsweise Pentan) und/oder optional einem bromhaltigen Flammschutzmittel, wie etwa Hexabromcyclododecan, HBC, wobei das erfindungsgemäße Verfahren zur Herstellung von Granulatkömem aus solchen Schmelzematerialien erfindungsgemäß verwendet werden kann.

Die Erfindung betrifft somit auch Granulat aus thermoplastischem Kunststoffmaterial, welches gemäß dem Verfahren der Erfindung hergestellt ist, wobei das Granulat bevorzugt aus Polyamid 6 mit Caprolactam als flüchtigem Bestandteil oder aus expandierbarem Polystyrol, EPS, mit einem Treibmittel und/oder optional einem bromhaltigen Flammschutzmittel bestehen kann.

Im Übrigen wird die Erfindung im Folgenden anhand der beispielhaften Figur einer entsprechenden Vorrichtung erläutert, wobei mit der erläuterten Vorrichtung das/die erfindungsgemäß(n) Verfahren durchgeführt werden kann/können.

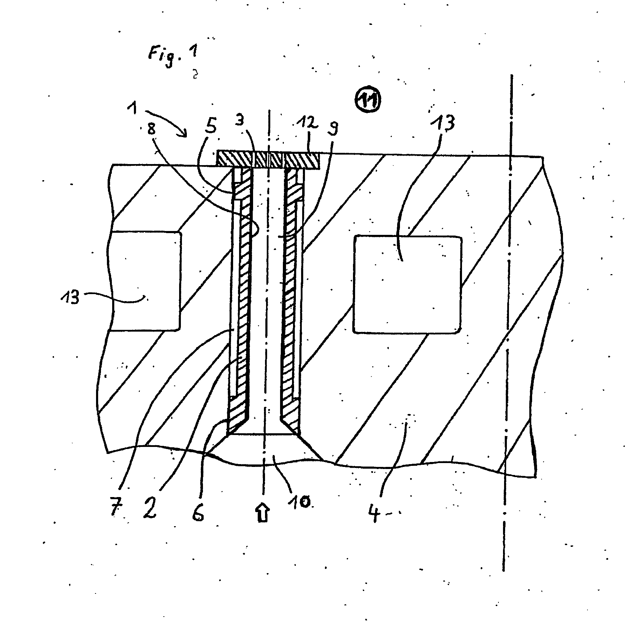

Fig. 1 eine schematische Schnittansicht einer Lochplatte mit einem Lochplatteneinsatz zur Durchführung einer bevorzugten Ausführungsform der Erfindung.

Die Figur 1 zeigt eine schematische Schnittansicht einer Lochplatte 1 mit einem Lochplatteneinsatz 2 zur Durchführung eines Verfahrens gemäß einer bevorzugten Ausführungsform der Erfindung.

Eine Lochplatte 1 weist einen Lochplattengrundkörper 4 auf, welcher z.B. mit einem Extruder oder eine Schmelzepumpe einer Granuliervorrichtung (nicht gezeigt) in Fluidverbindung gebracht werden kann oder den Abschluss davon bildet. In den Lochplattengrundkörper 4 sind mehrere Lochplatteneinsätze 2 eingesetzt, welche jeweils in Fluidverbindung mit einer oder im gezeigten Fall mehrerer Düsenöffnung(en) 3 stehen, welche sich zu einem z.B. mit Wasser als Kühl- und Transportmedium gefüllten bzw. davon durchströmten Prozessraum 11 der Granuliervorrichtung hin öffnen. Zwischen den Lochplatteneinsätzen 2 mit ihren ausgangsseitigen Abstandskrägen 5 und eingangsseitigen Abstandskrägen 6 und dem Lochplattengrundkörper 4 besteht so erfindungsgemäß jeweils ein im wesentlichen über die gesamte Länge der Lochplatteneinsätze 2 verlaufender Luftspalt 7. Die ausgangsseitigen Abstandskrägen 5 und eingangsseitigen Abstandskrägen 6 können gemäß einer hier nicht gezeigten aber ebenfalls bevorzugten Ausführungsform der Erfindung auch am Lochplattengrundkörper 4 angeordnet sein. Zusätzlich sind an der dortigen Stirnfläche des Lochplattengrundkörpers 4 noch ein oder mehrere Lochplattenverstärkungselement(e) 12, bevorzugt beispielsweise aus gegen Abrasion durch Messer einer Schneidvorrichtung resistenterem Material im Vergleich zum Lochplattengrundkörper 4, vorgesehen, welche(s) gemäß der gezeigten Ausführungsform jeweils einzelnen Lochplatteneinsätzen 2 so zugeordnet ist/sind, dass mehrere der dort hindurch laufenden Düsenöffnungen 3 mit dem dort durch den Lochplatteneinsatz 2 hindurch verlaufenden Schmelzekanal 9 in Fluidverbindung stehen. Die erfindungsgemäß vorgesehen Lochplatte 1 bildet mit den in den Lochplattengrundkörper 4 eingesetzten Lochplatteneinsätzen 2 und den Lochplattenverstärkungselementen 12 bzw. gegebenenfalls mit dem einen Lochplattenverstärkungselement 12 eine plane Lochplatten-Stimfläche mit den darin befindlichen Düsenöffnungen 3. Die Dicke der/des Lochplattenverstärkungselemente(s) 12 sowie der Durchmesser der Düsenöffnungen 3 (beispielsweise bei EPS-Materialien 0,1 bis 1,0 mm) hat im Übrigen auch Einfluss auf den Druck des Schmelzematerials im Bereich der Schmelzekanäle 9. Je größer die Dicke und je geringer der Bohrungsdurchmesser, umso höher wird der Druck dort im Schmelzekanal 9 sein, d.h. der Druckverlust des entsprechenden Schmelzematerials bei Durchtritt durch die Düsenöffnungen 3 dort im Bereich der/des Lochplattenverstärkungselemente(s) 12 zum Prozessraum 11 wird umso höher. Daher kann beim Betrieb einer solchen Lochplatte 1 eine Schmelzepumpe bzw. eine zusätzliche Schmelzepumpe gegebenenfalls erforderlich sein (in Figur 1 nicht gezeigt).

Der Schmelzekanal 9 des jeweiligen Lochplatteneinsatzes 2 fluchtet im eingesetzten Zustand des Lochplatteneinsatzes 2 mit einem jeweiligen Schmelzekanal 10 des Lochplattengrundkörpers 4. Der mit dem jeweiligen Schmelzekanal 10 des Lochplattengrundkörpers 4 fluchtende Schmelzekanal 9 des jeweiligen Lochplatteneinsatzes 2 ist gemäß der gezeigten Ausführungsform so gestaltet, dass der Einlaufkegel davon fluchtend mit dem Einlaufkegel im Bereich des jeweiligen Schmelzekanals 10 des Lochplattengrundkörpers 4 ist und, wie gesagt, mit mehreren Düsenöffnungen 3 in Fluidverbindung steht. Zur Abdichtung des Luftspalts 7 im eingangsseitigen Bereich sind gemäß der gezeigten Ausführungsform zumindest die eingangsseitigen Abstandskrägen 6 umfänglich durchgehend ausgebildet.

Der Lochplatteneinsatz 2 dient zum wechselbaren, d. h. herausnehmbar und wieder einsetzbaren Einsetzen in den Lochplattengrundkörper 4 der Lochplatte 1 einer Granuliervorrichtung. Der Lochplatteneinsatz 2 weist gemäß der gezeigten Ausführungsform jeweils in Hauptflussrichtung der dort hindurch tretenden Schmelze durch einen dort hindurch verlaufenden Schmelzekanal 9 gesehen eingangsseitig und ausgangsseitig zumindest einen eingangsseitigen Abstandskragen 6 und einen ausgangsseitigen Abstandskragen 5 auf. Ferner weist der Lochplatteneinsatz 2 strömungsoptimierende Maßnahmen auf, nämlich gemäß der in Figur 1 gezeigten Ausführungsform in Form einer Antihaftbeschichtung 8 im Bereich des dort hindurch verlaufenden Schmelzekanals 9, wobei die Antihaftbeschichtung 8 sich auch im eingangsseitigen Einlaufkegel des Lochplatteneinsatzes 2 (in Fig. 1 links zu sehen) erstreckt. Auch eine spanend glättende Oberflächenbearbeitung, z.B. durch Honen, ist als erfindungsgemäß strömungsoptimierende Maßnahme denkbar, aber hier nicht darstellbar. Der Schmelzekanal 9 kann erfindungsgemäß bevorzugt beispielsweise einen kreisförmigen Querschnitt aufweisen mit einem bevorzugten Durchmesser von bis zu 8 mm.

Zur Temperierung der Lochplatte 1 sind in dem Lochplattengrundkörper 4 noch Temperierkanäle 13 angeordnet, welche entweder von einem Temperierfluid, wie etwa Temperieröl, durchströmt werden können, oder mit Temperierpatronen, wie etwa elektrisch betriebenen Heizpatronen (in Figur 1 nicht gezeigt) bestückt sein können. Optional kann das Temperierfluid der zusätzlichen Heizeinrichtung auch den Luftspalt (9) durchströmen, wobei dann eine Fluidverbindung zwischen den Temperierkanälen (13) und dem jeweiligen Luftspalt (9) besteht (in Fig. 1 nicht explizit gezeigt).

Die Hauptflussrichtung des Schmelzestroms durch den Schmelzekanal 10 bzw. den Schmelzekanal 9 ist in Figur 1 durch einen Pfeil angegeben.

Durch die Gestaltung der Lochplatte 1 mit den Lochplatteneinsätzen 2 ist bei entsprechendem erfindungsgemäßen Einsatz eine flexible und einfache Konstruktion einer Lochplatte 1 möglich, wobei auch ein Austausch schnell und zuverlässig möglich ist. Durch den Austausch der Lochplatteneinsätze können im Falle der Bildung von Ablagerungen im Bereich der Schmelzekanäle zudem diese binnen kurzer zeit gereinigt werden und die Lochplatte wider eingesetzt werden. Die entfemeten Lochplatteneinsätze können dann separat gereinigt und wiederverwendet werden.

In der Lochplatte können mehrere Düsenöffnungen jeweils einem Lochplatteneinsatz clusterartig zugeordnet sein.

Zweckmäßig kann der Lochplatteneinsatz aus einem Keramik-Material oder aus einem temperaturbeständigen Polymermaterial bestehen, bevorzugt aus Polymermaterial aus der Gruppe PBI, PTFE, PAI, PEEK oder PPS mit denen Polymeren und/oder Copolymeren.

Gemäß einer bevorzugten Ausführungsform kann die Oberfläche der Lochplatte, aus welcher zu granulierendes Schmelzematerial austritt, mit einer abrasionsresistenten Schicht versehen sein, bevorzugt aus Metall-Nitrit, besonders bevorzugt Chrom-Nitrit oder Titan-Nitrit. Der Verschleißschutz dort kann **dadurch erfindungsgemäß** bevorzugt verbessert sein.

Mit der Lochplatte kann ein System zur erfindungsgemäßen Granulierung in ein Fluid, bevorzugt ein in seinen grundlegenden, sonstigen, nicht erfindungsrelevanten Funktionsgruppen bekanntes Unterwassergranulationssystem, vorgesehen sein.

Die Lochplatte bzw. das mit einer solchen Lochplatte versehene System zur Granulierung kann Verwendung finden für eine erfindungsgemäße Granulierung in ein Fluid, bevorzugt für die Unterwassergranulation, eines Schmelzematerials aus thermoplastischem Kunststoffmaterial und/oder einer Polymerschmelze, welche bevorzugt einen thermisch sensiblen Bestandteil und/oder ein Schäummittel enthält, dabei bevorzugt niedrigsiedendes Polyamid 6 mit Caprolactam als flüchtigem Bestandteil oder expandierbares Polystyrol, EPS, mit Pentan als Treibmittel und/oder optional einem bromhaltigen Flammschutzmittel.

Beispiel:
Gemäß einer bevorzugten Ausführungsform der Erfindung wurde seitens der Anmelderin ein Versuchsmuster der erfindungsgemäßen Lochplatte mit den erfindungsgemäßen Lochplatteneinsätzen gebaut und das erfindungsgemäße Verfahren getestet.

Die beispielhafte erfindungsgemäß eingesetzte Lochplatte diente der Herstellung von Granulatkörnern aus Polystyrol mit Treibmittelzusätzen (z.B. Pentan mit 1 bis 8 Gew.%) und einer Dichte des entsprechenden Schmelzematerials von 0,85 g/cm³, was im ausgehärteten Zustand eine Dichte von 1,00 g/cm³ ergab. Der Durchsatz an Schmelzematerial durch die Düsenöffnungen (1 Cluster, siehe unten) der beispielhaften Lochplatte betrug zwischen etwa 8 und etwa 18 kg/Stunde bei einem sich ergebenden durchschnittlichen Gewicht der Granulatkörner von 0,2 mg bzw. 0,5 mg und einem durchschnittlichen Durchmesser der Granulatkörner von 0,5 mm bis 1,0 mm.

Die Düsenöffnungen waren zu jeweils einem Cluster von 19 Düsenöffnungen (Durchmesser jeweils 0,6 mm) mit einem Abstand von 1,8 mm zueinander zusammengefasst und jeweils einem erfindungsgemäßen Lochplatteneinsatz mit einem dort hindurch verlaufenden Schmelzekanal mit kreisförmigem Querschnitt mit einem Durchmesser von 8 mm zugeordnet. Die jeweiligen Lochplatteneinsätze waren im Bereich der dort jeweils hindurch verlaufenden Schmelzekanäle glättend oberflächenbearbeitet mit einer sich so dort ergebenden Rauhigkeit von weniger als 0,8 µm.

Konkret wurde gemäß dem erfindungsgemäßen Verfahren in einer entsprechenden Unterwassergranulationsvorrichtung der Anmelderin eine Polystyrolschmelze mit einem Zusatz von 4-7% Pentan als Treibmittel (mit Pentan begastes Polystyrol) zu Granulatkörnern verarbeitet. Die in der Schmelzeströmung beim Eintritt in den Schmelzekanal dort gemessene Schmelzetemperatur lag zwischen 170 und 190°C. Die durch in den Lochplattengrundkörper im Bereich der Schmelzekanäle in deren Nähe in den Lochplattengrundkörper einbringbare Thermoelemente bestimmte Temperatur des Lochplattengrundkörpers lag dabei zwischen 180 und 200°C. Die Temperatur eines Temperieröls, welches zusätzliche Temperierkanäle im Lochplattengrundkörper durchströmte, lag zwischen 200 und 220°C. Der Druckabfall der Schmelze vom Eintritt in den Schmelzekanal vom dort gemessenen Druckwert im Schmelzestrom bis zu den Düsenöffnungen mit dem dort gemessenen Druckwert im Schmelzestrom beim Austritt aus den Düsenöffnungen lag über die Dicke der Lochplatte in einem Bereich von 100 bis 160bar. Die so erzeugten Granulatkörner waren von gleichbleibender Qualität und Zusammensetzung.

## Patentansprüche

1. Verfahren zum Beheizen von Schmelzekanälen in einer Lochplatte einer Granuliervorrichtung,
mit zumindest einer darin angeordneten Düsenöffnung und einem Lochplattengrundkörper, **dadurch gekennzeichnet, dass**
das Verfahren die Energie einer Schmelze zum Beheizen über die gesamte Länge eines jeweiligen Schmelzekanals bis zur Düsenöffnung nutzt und dazu zumindest einen der folgenden Schritte aufweist:
- Vorsehen einer Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Anti-Haft Beschichtung und/oder in Form einer spanend glättenden Oberflächenbearbeitung.

2. Verfahren nach Anspruch 1, **dadurch gekennzeichnet, dass** der Lochplattengrundkörper eine Temperatur aufweist, welche nicht mehr als 30°C über der Temperatur der Schmelze beim Eintritt in den Schmelzekanal liegt, bevorzugt nicht mehr als 10°C darüber und besonders bevorzugt weist er eine Temperatur, welche gleich oder niedriger ist als die der Schmelze beim Eintritt in den Schmelzekanal.

3. Verfahren nach Anspruch 1 oder 2, **dadurch gekennzeichnet, dass** die Wandung als Lochplatteneinsatz zum entfernbaren Einsetzen in den Lochplattengrundkörper vorgesehen wird, wobei im eingesetzten Zustand zischen dem Lochplatteneinsatz und dem Lochplattengrundkörper ein sich im wesentlichen über die gesamte Länge des Schmelzekanals verlaufend angeordneter Isolationshohlraum erstreckt.

4. Verfahren nach Anspruch 3, **dadurch gekennzeichnet, dass** der Isolationshohlraum von einem Temperierfluid durchströmt wird.

5. Verfahren nach einem der Ansprüche 1 bis 4, **dadurch gekennzeichnet, dass** durch die strömungsoptimierende Maßnahme in Form der spanend glättenden Oberflächenbearbeitung eine Oberflächenrauhigkeit im Bereich des Schmelzekanals (9) von kleiner oder gleich 0,8 µm, bevorzugt im Bereich von 0,4 µm bis 0,6 µm, eingestellt wird.

6. Verfahren nach einem der Ansprüche 1 bis 5, **dadurch gekennzeichnet, dass** die Temperatur der Schmelze beim Eintritt in den Schmelzekanal etwa 140 °C bis etwa 240 °C, bevorzugt etwa 150 °C bis etwa 200 °C, bevorzugter etwa 160 °C bis etwa 180 °C beträgt.

7. Verfahren nach einem der Ansprüche 1 bis 6, **dadurch gekennzeichnet, dass** das Verfahren die Energie der Schmelze zum Beheizen über die gesamte Länge eines jeweiligen Schmelzekanals bis zur Düsenöffnung nutzt und dazu beide der folgenden Schritte aufweist:
- Vorsehen einer Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Anti-Haft Beschichtung und/oder in Form einer spanend glättenden Oberflächenbearbeitung.

8. Verfahren nach einem der Ansprüche 1 bis 7, **dadurch gekennzeichnet, dass** die Schmelze eine Schmelze aus thermoplastischem Kunststoffmaterial ist und/oder eine Polymerschmelze ist, welche bevorzugt einen thermisch sensiblen Bestandteil und/oder ein Schäummittel enthält, dabei bevorzugt niedrigsiedendes Polyamid 6 mit Caprolactam als flüchtigem Bestandteil oder expandierbares Polystyrol, EPS, mit einem Treibmittel und/oder optional einem bromhaltigen Flammschutzmittel.

9. Verfahren zum Granulieren einer Schmelze, welche einen thermisch sensiblen Bestandteil und/oder ein Schäummittel enthält, in eine Granulierkammer, durch welche ein Fluid eines Fluid-Kreislaufs strömt, mit einem Druck oberhalb des Umgebungsdrucks, wobei in einem ersten Schritt die Schmelze durch zumindest einen Schmelzekanal und durch zumindest eine Düsenöffnung einer Lochplatte mit einem Lochplattengrundkörper in die Granulierkammer gepresst wird, in einem zweiten Schritt die Schmelze mittels einer Schneidvorrichtung in Granulatkörner zerteilt wird und in einem dritten Schritt die so entstehenden Granulatkörner zusammen mit dem Fluid aus der Granulierkammer ausgetragen werden und dann das Fluid und die Granulatkörner voneinander getrennt werden,
**dadurch gekennzeichnet, dass**
das Verfahren die Energie der Schmelze zum Beheizen über die gesamte Länge eines jeweiligen Schmelzekanals bis zur Düsenöffnung nutzt und dazu zumindest einen der folgenden Schritte aufweist:
- Vorsehen einer Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Anti-Haft Beschichtung und/oder in Form einer spanend glättenden Oberflächenbearbeitung.

10. Verfahren nach Anspruch 9, **dadurch gekennzeichnet, dass** der Lochplattengrundkörper eine Temperatur aufweist, welche nicht mehr als 30°C über der Temperatur der Schmelze beim Eintritt in den Schmelzekanal liegt, bevorzugt nicht mehr als 10°C darüber.

11. Verfahren nach Anspruch 9, **dadurch gekennzeichnet, dass** der Lochplattengrundkörper eine Temperatur aufweist, welche gleich oder niedriger ist als die der Schmelze beim Eintritt in den Schmelzekanal.

12. Verfahren nach Anspruch 9 oder 10 oder 11, **dadurch gekennzeichnet, dass** die Schmelze eine Schmelze aus thermoplastischem Kunststoffmaterial ist und/oder eine Polymerschmelze ist, welche bevorzugt einen thermisch sensiblen Bestandteil und/oder ein Schäummittel enthält, dabei bevorzugt niedrigsiedendes Polyamid 6 mit Caprolactam als flüchtigem Bestandteil oder expandierbares Polystyrol, EPS, mit einem Treibmittel und/oder optional einem bromhaltigen Flammschutzmittel.

13. Verfahren nach einem der Ansprüche 9 bis 12, **dadurch gekennzeichnet, dass** das Verfahren die Energie der Schmelze zum Beheizen über die gesamte Länge eines jeweiligen Schmelzekanals bis zur Düsenöffnung nutzt und dazu beide der folgenden Schritte aufweist:
- Vorsehen einer Wandung eines jeweiligen Schmelzekanals aus einem Material mit einer Wärmeleitfähigkeit, welche kleiner ist als die Wärmeleitfähigkeit des Materials des umgebenden Lochplattengrundkörpers,
- Vorsehen von strömungsoptimierenden Maßnahmen an der Wandung eines jeweiligen Schmelzekanals, in Form einer Anti-Haft Beschichtung und/oder in Form einer spanend glättenden Oberflächenbearbeitung.

14. Granulat aus thermoplastischem Kunststoffmaterial, hergestellt nach dem Verfahren gemäß den Ansprüchen 9 bis 13.

15. Granulat nach Anspruch 14, **dadurch gekennzeichnet, dass** das Granulat aus Polyamid 6 mit Caprolactam als flüchtigem Bestandteil oder aus expandierbarem Polystyrol, EPS, mit einem Treibmittel und/oder optional einem bromhaltigen Flammschutzmittel besteht.
